**Europäisches Patentamt**

**European Patent Office**

**Office européen des brevets**

(19)

(11) Veröffentlichungsnummer: **0 216 250 B1**

(12) # EUROPÄISCHE PATENTSCHRIFT

(45) Veröffentlichungstag der Patentschrift:
04.04.90

(21) Anmeldenummer: 86112513.6

(22) Anmeldetag: 10.09.86

(51) Int. Cl.⁴: **H04Q 1/50**, H04J 3/12, H04J 3/06

(54) Verfahren zur übernahme von Kennzeichenwörtern eines plesiochronen Multiplexsignals in eine Kennzeichenumsetzerzentrale.

(30) Priorität: 23.09.85 DE 3533916

(43) Veröffentlichungstag der Anmeldung:
01.04.87 Patentblatt 87/14

(45) Bekanntmachung des Hinweises auf die Patenterteilung:
04.04.90 Patentblatt 90/14

(84) Benannte Vertragsstaaten:
AT BE CH DE FR GB IT LI NL SE

(56) Entgegenhaltungen:
EP-A- 0 111 792
US-A- 4 058 682

COMMUTATION ET ELECTRONIQUE, no. 34, Juli 1971, Seiten 7-24, Paris, FR; D. FEUERSTEIN et al.: "Groupes d'équipements de synchronisation du système de commutation temporelle Platon"

(73) Patentinhaber: Siemens Aktiengesellschaft, Wittelsbacherplatz 2, D-8000 München 2(DE)

(72) Erfinder: Günther, Wolfdietrich, Korbinianstrasse 14, D-8190 Wolfratshausen(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Übernahme von Kennzeichen-Datenwörtern eines plesiochronen Multiplexsignals nach dem Oberbegriff des Patentanspruchs 1.

Mit der Einführung der digitalen Zeitmultiplex-Übertragung von Fernsprechkanälen ist es erforderlich geworden, Kennzeichenumsetzer-Zentralen einzusetzen, die die analogen vermittlungstechnischen Schaltsignale in digitale Information umsetzen und, eingefügt in einen Multiplex-Pulsrahmen, über eine digitale Datenverbindung übertragen. In der Gegenrichtung wird die vermittlungstechnische Information in Form von Kennzeichenwörtern empfangen und in analoge Schaltsignale umgesetzt. Die Realisierung der Kennzeichenumsetzer-Zentrale erfolgt heute unter Verwendung von Mikroprozessoren für den zentralen Verarbeitungsteil. In Beiheft "Digital-Übertragungstechnik", Siemens AG, 2. Jahrgang (1979), Seiten 65 bis 71 ist ein entsprechender Kennzeichenumsetzer beschrieben. Auf die Synchronisierung wird hierbei nicht eingegangen. Sie erfolgt jedoch hardwaremäßig im Kennzeichenumsetzer-Zentralteil. Der Funktionsablauf im zentralen Verarbeitungsteil ist mit der Sendefrequenz der Datenschnittstelle synchronisiert. Das empfangene Multiplexsignal weist zwar eine hohe Frequenzkonstanz auf, Sende- und Empfangssignal werden daher als plesiochron bezeichnet, trotzdem können sich Sendetakte und Taktraster des empfangenen Multiplexsignals beliebig voneinander entfernen. Das empfangene Multiplexsignal wird hier im Gegensatz zum frequenzkonstanten Sendesignal als "plesiochrones Multiplexsignal" bezeichnet. Es muß sichergestellt werden, daß alle Kennzeichenwörter stets korrekt in den Mikroprozessor des zentralen Verarbeitungsteils übernommen werden. Hierbei ist zu berücksichtigen, daß bei der Vielzahl der zu erledigenden Aufgaben durch den zentralen Verarbeitungsteil nur ein minimaler Zeitraum für die korrekte Übernahme der Kennzeichenwörter zur Verfügung steht.

Aufgabe der Erfindung ist es, ein Verfahren zur korrekten Übernahme von Signalisierungswörtern eines plesiochronen Multiplexsignals in einen Mikroprozessor des zentralen Verarbeitungsteils einer Kennzeichenumsetzer-Zentrale anzugeben, die nur eine minimale Abarbeitungszeit durch den Mikroprozessor erfordert.

Die Aufgabe wird durch die im Patentanspruch 1 angegebenen Merkmale gelöst.

Vorteilhafte Ausbildungen der Erfindung sind in den Unteransprüchen angegeben.

Prinzipiell ist es möglich, beim Eintreffen relevanter Empfangsdaten das laufende Programm zu unterbrechen und die Empfangsdaten in den Datenspeicher zu übernehmen. Diese Lösung ist jedoch nur möglich, wenn ausreichende Zeit zur Verfügung steht.

Eine weitere Möglichkeit besteht darin, vorsorglich während der Zeitdauer eines Pulsrahmens jeweils zweimal die Empfangsdaten abzufragen. Auch diese Lösung ist aus Zeitgründen nicht durchführbar.

Erfindungsgemäß wird nur eine Doppelabfrage während eines Pulsrahmens durchgeführt und die Übernahme der übrigen Signalisierungsdaten erfolgt mit einem entsprechend ausgewählten Einspeichertakt. Die Doppelabfrage wird während des Aussendens eines Mehrfachrahmen-Kennungswortes durchgeführt, da hier am meisten Rechenzeit zur Verfügung steht.

Ausführungsbeispiele der Erfindung werden anhand von Figuren 1 bis 6 näher erläutert.

Es zeigen

Fig. 1 das Prinzipschaltbild einer Kennzeichenumsetzer-Zentrale,

Fig. 2 ein Ausführungsbeispiel der erfindungsgemäßen Anordnung,

Fig. 3 ein weiteres Ausführungsbeispiel der erfindungsgemäßen Anordnung,

Fig. 4 ein Zeitdiagramm des Pulsrahmens,

Fig. 5 ein Zeitdiagramm des Mehrfach-Pulsrahmens und ein Taktdiagramm und

Fig. 6 ein Zeitdiagramm mit einem Zeitfenstersignal.

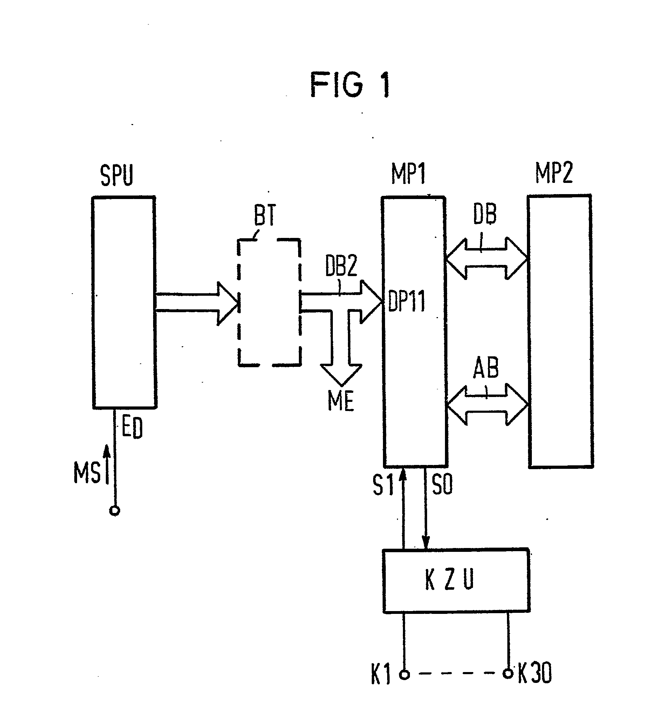

In Fig. 1 ist eine Kennzeichenumsetzer-Zentrale dargestellt. Sie enthält im wesentlichen einen ersten Mikroprozessor MP1, der über einen Datenbus DB und einen Adressenbus AB mit einem zweiten Mikroprozessor MP2 verbunden ist. Über einen seriellen Datenausgang SO und einen seriellen Dateneingang SI ist ein Kennzeichenumsetzer KZU an den ersten Mikroprozessor MP1 angeschlossen. An den Kennzeichenumsetzer sind bis zu 30 Fernsprechkanäle K1 bis K30 angeschaltet.

Ein zweiter Datenport DP11 ist über einen zweiten Datenbus DB2 mit einer hier nicht dargestellten Multiplex-Einrichtung ME und über eine Bustrennstufe BT mit einem Seriell/ Parallel-Umsetzer SPU verbunden, an dessen seriellem Dateneingang $E_D$ ein Multiplexsignal MS anliegt.

Die vermittlungstechnischen Signale werden vom Kennzeichenumsetzer KZU in digitale Kennzeicheninformation umgesetzt und an dem zweiten Datenport DP11 des ersten Mikroprozessors MP11 in Form von Kennzeichenwörtern im Multiplexbetrieb an die Multiplex-Einrichtung ME zum Einfügen in den Pulsrahmen ausgegeben. In der Gegenrichtung werden im empfangenen Multiplexsignal MS eingefügte Kennzeichen-Datenwörter, dies sind jeweils zwei zu einem Datenwort zusammengefaßte Kennzeichenwörter oder ein Mehrfachrahmen-Kennungswort, durch den Seriell/Parallel-Umsetzer in parallele Datenwörter umgesetzt und an den zweiten Datenport DP11 des ersten Mikroprozessors durchgeschaltet. Dieser setzt die Kennzeichenwörter in für den Kennzeichenumsetzer KZU günstige Kennzeicheninformation um, diese wiederum vom Kennzeichenumsetzer in analoge vermittlungstechnische Signale umgesetzt wird.

Zu den Aufgaben des ersten Mikroprozessors gehört es auch, den Beginn des Mehrfachrahmens anhand des Mehrfachrahmen-Kennungswortes aufzufinden, während aus Zeitgründen meist eine separate Pulsrahmen-Synchronisierung vorgesehen ist. Der zweite Mikroprozessor MP2 übernimmt eine weitergehende logische Verarbeitung der Kennzeichenwörter und in der Gegenrichtung die entsprechende Verarbeitung der vermittlungstechnischen Signale der Fernsprechkanäle. Für die Erfindung ist dies jedoch ohne Bedeutung und braucht daher hier auch nicht näher erläutert werden.

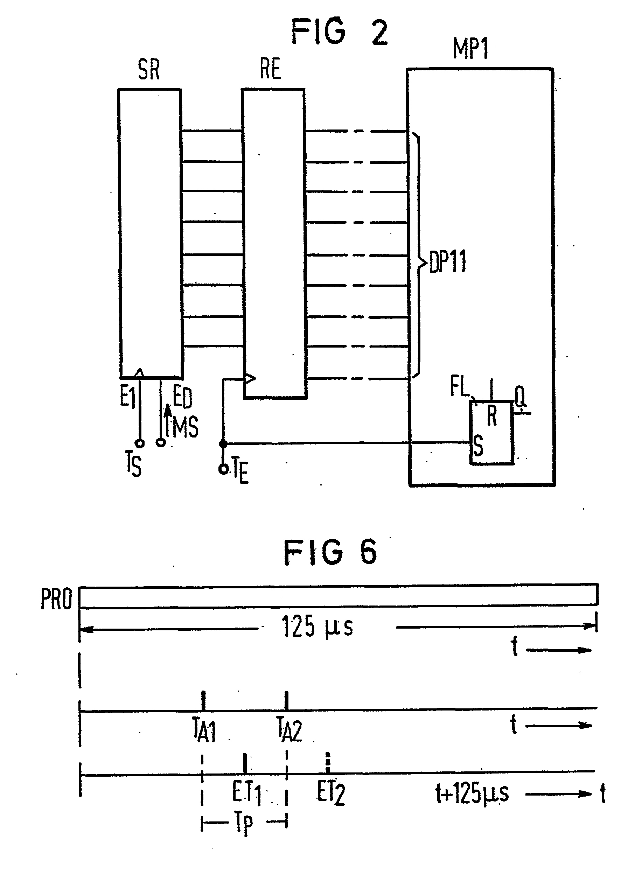

In Fig. 2 ist der Seriell/Parallel-Umsetzer und sein Anschluß an den ersten Mikroprozessor MP1 detailliert dargestellt. Der Seriell/Parallel-Umsetzer enthält ein Schieberegister SR, dessen Parallelausgänge mit Paralleleingängen eines Registers RE verbunden sind, dessen Parallelausgänge wiederum an den Datenport DP11 des ersten Mikroprozessors angeschaltet sind.

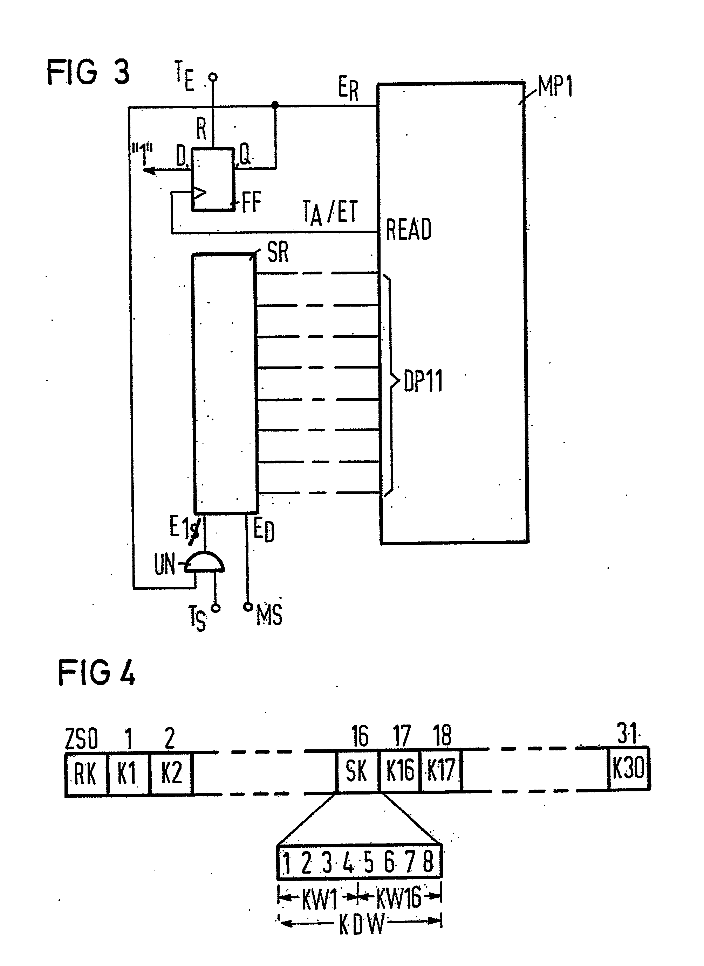

Das an dem seriellen Dateneingang $E_D$ anliegende Multiplexsignal MS wird mit dem am Takteingang $E_1$ anliegenden seriellen Schiebetakt $T_S$ in das Schieberegister SR eingespeichert. Jeweils wenn ein Datenwort des Zeitschlitzes 16 - des Signalisierungskanals SK (Fig. 4) - in das Schieberegister SR eingeschrieben ist, wird dies Datenwort mit einem Empfangstakt $T_E$ in das Register RE umgespeichert.

Dieser Empfangstakt wird von der Pulsrahmen-Synchronisierung geliefert und tritt nur jeweils dann auf, wenn ein Datenwort des Zeitschlitzes ZS16 - hier als Kennzeichen-Datenwort bezeichnet - empfangen wird. Im ersten Mikroprozessor MP1 wird eine interne Speichereinrichtung FL (FLAG) über einen Setzeingang S gesetzt. Nach Übernahme des Kennzeichen-Datenwortes in den Mikroprozessor wird die Speichereinrichtung FL über einen Rücksetzeingang R rückgestellt. Die Speichereinrichtung ist im Mikroprozessor vorgesehen.

In Fig. 3 ist eine Schaltungsvariante des Seriell/Parallel-Umsetzers dargestellt. In dieser Variante fehlt das Register RE. Die Parallelausgänge des Schieberegisters SR sind an den Datenport DP11 geführt. In Fig. 2 und Fig. 3 ist die Bustrennstufe BT nicht eingezeichnet, da sie für die Beschreibung unwesentlich ist. Dem Takteingang $E_{1s}$ des Schieberegisters ist ein UND-Gatter UN vorgeschaltet. Der Q-Ausgang einer D-Kippstufe FF ist mit dem zweiten Eingang des UND-Gatters verbunden und ebenso mit einem Steuereingang $E_R$ des Mikroprozessors MP1. Es ist nicht mehr nötig, daß dem Mikroprozessor MP1 außerdem der Empfangstakt $T_E$ zugeführt wird. Mit dem Empfangstakt $T_E$ wird der Q-Ausgang über den Rücksetz-Eingang R auf die logische O gesetzt und damit das weitere Einspeichern von Information in das Schieberegister SR unterbunden. Wird die Information aus dem Schieberegister SR in den Mikroprozessor übernommen, so wird der Q-Ausgang der D-Kippstufe durch einen Abfragetakt $T_A$ oder durch einen Einspeichertakt ET eingestellt und es kann neue Information in das Schieberegister SR eingeschrieben werden. Diese Takte werden vom ersten Mikroprozessor MP1 bei dieser Ausbildung abgegeben.

Zum besseren Verständnis wird noch darauf hingewiesen, daß im ersten Mikroprozessor MP1 ein Kanalzähler vorgesehen ist, der bei jedem eingespeicherten Kennzeichen-Datenwort weitergeschaltet wird, so daß stets die korrekte Zuordnung von Kennzeichen-Datenwörtern bzw. Kennzeichenwörtern und Fernsprechkanälen gegeben ist. Die gesamte Signalverarbeitung ist an den Sendetakt - also an das auszusendende Multiplexsignal - gekoppelt, d.h. die Programmabläufe sind mit dem Sendetakt synchronisiert oder von diesem getriggert.

Um eine korrekte Übernahme aller Kennzeichen-Datenwörter vom Register RE bzw. vom Schieberegister SR nach Fig. 3 zu erreichen wird während jedes sechzehnten Pulrahmen des ausgesendeten Pulsrahmens PR0 eine doppelte Abfrage durchgeführt, ob ein Kennzeichen-Datenwort bereits empfangen wurde.

Die Abfragezeitpunkt und die Einspeicherzeitpunkte für die empfangenen Kennzeichen-Datenwörter entsprechend jeweils Programmabschnitten. In der weiteren Beschreibung und wegen einer vereinfachten Darstellung werden diese Zeitpunkte mit Takten bezeichnet.

Zunächst soll die Struktur eines Pulsrahmens und eines Mehrfachrahmens anhand des Übertragungssystems PCM 30 erläutert werden. Die Erfindung ist natürlich keineswegs auf dieses Übertragungssystem oder den angegebenen Pulsrahmen beschränkt.

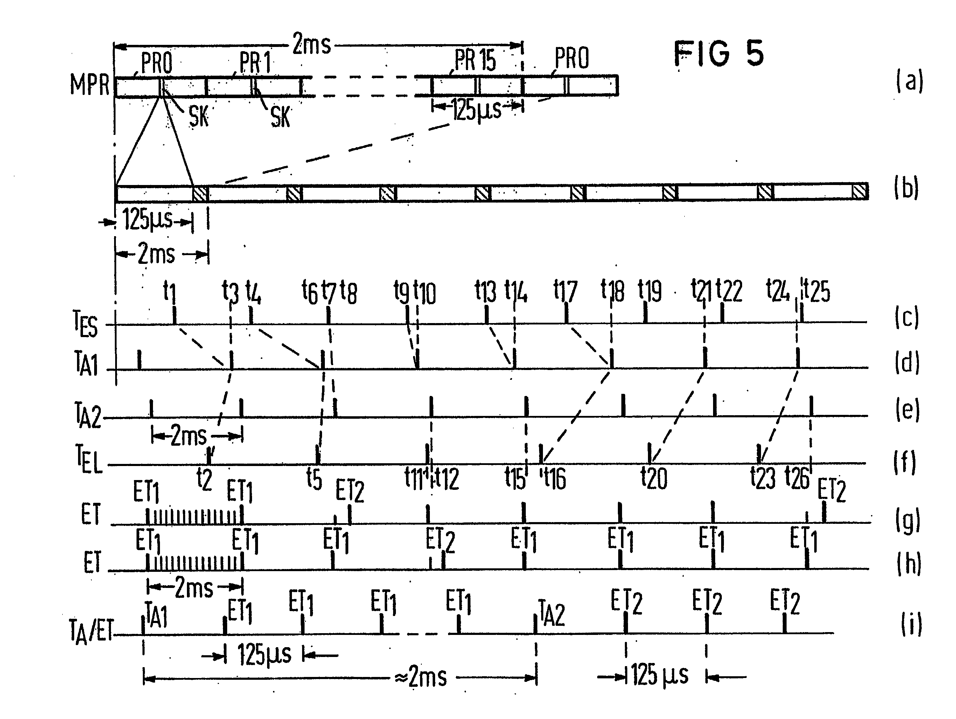

Ein Pulsrahmen nach Fig. 4 enthält 32 Zeitschlitze ZS0 bis ZS31. Im Zeitschlitz ZS0 wird ein Rahmenkennungswort oder ein Meldewort übertragen. In den folgenden Zeitschlitzen ZS1 bis ZS15 wird jeweils ein Datenwort eines Fernsprechkanales übertragen. Der Zeitschlitz ZS16 wird als Signalisierungskanal SK bezeichnet, in dem vermittlungstechnische Kriterien, hier ein Kennzeichen-Datenwort KDW, das zwei Kennzeichenwörter KW1 und KW16 von je vier Bits Länge enthält, übertragen werden. So werden die Kennzeichenwörter des Fernsprechkanals 1 und des Fernsprechkanals 16 in einem Kennzeichen-Datenwort übertragen, dann folgen die Kennzeichenwörter des Fernsprechkanals 2 und des Fernsprechkanals 17 usw. 16 dieser Pulsrahmen PR0 bis PR15 sind zu einem Mehrfachrahmen zusammengefaßt. Dies ist in Fig. 5 (a) dargestellt. Bei dem Übertragungssystem PCM 30 beträgt die Zeitdauer für einen Pulsrahmen 125 µs und entsprechend die Zeitdauer für einen Mehrfachrahmen MPR 2 ms. Im ersten Zeitschlitz ZS16 des Pulsrahmens PR0 eines Mehrfachrahmens MPR wird anstelle von Kennzeichenwörtern ein Mehrfachrahmen-Kennungswort übertragen, das zur Synchronisierung dient. In der folgenden Zeile (b) der Fig. 5 sind mehrere aufeinanderfolgende Mehrfachrahmen dargestellt. Aus Darstellungsgründen ist diese Darstellung nicht maßstabsgerecht. In jedem 16. Pulsrahmen, im Pulsrahmen PR0, ist der Zeitschlitz des Signalisierungskanals SK relativ lang bei einer Zeitdauer von 125 µs dargestellt. Dies entspricht der Zeitdauer eines sendeseitigen Pulsrahmens und ca. der Zeitdauer, die ein Kennzeichen-Datenwort im Register RE durchschnittlich gespeichert ist. Der restliche Mehrfachrahmen nimmt in dieser Darstellung nur einen kleinen schraffierten Zeitbereich ein, um die langsame Veränderung der Phasenlage des empfangenen Multiplexsignals gegenüber dem ausgesendeten Multiplexsignal darstellen zu können. In Fig. 5 (b) ist das von der Kennzeichenumsetzer-Zentrale ausgesendete Multiplexsignal dargestellt. Phasenstarr zu diesem werden zwei Abfrageimpulse $T_{A1}$ und $T_{A2}$ während jedes 16. Pulsrahmens PR0 verwendet. Das empfangene Multiplexsignal entspricht dem ausgesendeten Multiplexsignal, jedoch ändert sich seine Phasenlage gegenüber diesem langsam. Die Abfragetakte treten in kurzen Zeitabständen nacheinander auf. Der erste Abfragetakt $T_{A1}$ wird als früher, der zweite als später Abfragetakt $T_{A2}$ bezeichnet. Jeweils, wenn ein Kennzeichen-Datenwort im Zeitschlitz ZS16 des empfangsseitigen Mehrfachrahmens empfangen wurde, wird von der Pulsrahmen-Synchronisierung ein Empfangstakt $T_E$ abgegeben. Dies ist in der Fig. 5 (c) für einen gegenüber dem Sendetakt $T_{A1}$ schnelleren Empfangstakt $T_{ES}$ dargestellt. Die Änderung der Phasenlage des Empfangstaktes gegenüber den starren Abtasttakten $T_{A1}$ bzw. $T_{A2}$ ist stark übertrieben dargestellt.

Zum Zeitpunkt t1 liegt ein Kennzeichen-Datenwort, das ein Mehrfachrahmen-Kennungswort oder ein zwei Kennzeichenwörter enthält, am Datenport DP11 des ersten Mikroprozessors MP1 an. Dies Datenwort wird mit dem ersten Abfragetakt $T_{A1}$ in ein Register des Mikroprozessors MP1 zum Zeitpunkt t3 übernommen. Anschließend wird die Speichereinrichtung FL zurückgesetzt. Zum Zeitpunkt des nächsten zweiten Abfragetakts $T_{A2}$ ist noch kein neues Kennzeichen-Datenwort vorhanden, also noch kein Empfangstakt $T_{ES}$ aufgetreten. Der nächste Empfangstakt kommt zum Zeitpunkt t4 und das nächste Kennzeichen-Datenwort wird mit dem nächsten ersten Abfragetakt $T_{A1}$ (t6) abgefragt und eingespeichert. Zum Zeitpunkt $t_7$ kommt bereits der nächste Empfangstakt $T_{ES}$ und das anliegende Kennzeichen-Datenwort wird unmittelbar darauf mit dem späten zweiten Abfragetakt $T_{A2}$ zum Zeitpunkt $t_8$ abgefragt und, da die Abfrage positiv ausfällt, auch eingespeichert.

Erfolgt die Übernahme des Kennzeichen-Datenwortes mit dem frühen Abfragetakt $T_{A1}$, so werden die Kennzeichen-Datenwörter des Signalisierungskanals aller folgenden 15 Pulsrahmen mit einem frühen Einspeichertakt $ET_1$, der ca. in der Mitte zwischen beiden Abfragetakten liegt, in den Mikroprozessor übernommen. Tritt jedoch ein Empfangstakt $T_E$ zwischen beiden Abfragetakten auf, so werden die Kennzeichen-Datenwörter der folgenden 15 Pulsrahmen mit einem späteren nach dem zweiten Abfragetakt liegenden Einspeichertakt $ET_2$ übernommen. Dies ist zum ersten Mal nach dem Zeitpunkt $t_8$ erforderlich. Auf den zum Zeitpunkt $t_9$ auftretenden Empfangstakt folgt wiederum der frühe Abfragetakt $T_{A1}$. Dies wiederholt sich bis zum Zeitpunkt $t_{25}$. Der Empfangstakt $T_{ES}$ liegt hier wiederum zwischen den beiden Abfragetakten $T_{A1}$ und $T_{A2}$ und dies führt wieder dazu, das für die Dauer des restlichen Mehrfachrahmens wieder späte Einspeichertakte $ET_2$ verwendet werden. Der resultierende Einspeichertakt ET ist unter (g) dargestellt. Bei dieser Darstellung ist zu beachten, daß nicht nur zu den dargestellten Zeitpunkten Einspeichertakte vorhanden ist, sondern daß - wie in der Fig. 5 (g) angedeutet - anstelle eines dargestellten Einspeichertaktes immer 15 Einspeichertakte ET vorgesehen sind, mit denen jeweils ein Kennzeichen-Datenwort des Signalisierungskanals in den Mikroprozessor übernommen wird (i). Die unter (g) dargestellten Impulse stehen folglich symbolisch jeweils für eine Impulsserie von 15 Einspeichertakten, die eine Abstand einer Pulsrahmendauer von 125 µs aufweisen und gegenüber den Einspeichertakten verschoben sind.

Ein genaues Zeitdiagramm zur Lage der Abfragetakte und Einspeichertakte ist in Fig. 6 dargestellt. Während des Aussendens des Pulsrahmens PR0 wird die Doppelabfrage mit den Abfragetakten $T_{A1}$ und $T_{A2}$ durchgeführt. Im folgenden Pulsrahmen (nach 125 µs) erfolgt die Übernahme des nächsten Kennzeichen-Datenworts mit einem Einspeichertakt $ET_1$ oder $ET_2$ usw. In Fig. 5 (i) sind die unterschiedlichen Takte $T_{A1}$, $T_{A2}$, $ET_1$ und $ET_2$, mit denen eine Übernahme erfolgt, nochmals dargestellt. Als Abstand $T_P$ zwischen den Abfragetakten sind bereits wenige Mikrosekunden ausreichend. Der minimale Abstand wird von der Frequenzkonstanz der Multiplexsignale bestimmt. Da diese sehr hoch ist, sind programmtechnische Merkmale für die Lage und den Abstand entscheidend. Ein günstiger Wert für den Abstand liegt bei ca. 15 µs. Der erste frühe Einspeichertakt $ET_1$ liegt ca. in der Mitte der Abfragetakte. Auch bei den Einspeichertakten ist ein Abstand von ca. 15 µs ausreichend. Der Abstand der Takte wird von der maximal zulässigen Frequenztoleranz des Multiplexsignals bestimmt.

Die Abfragetakte werden - wie beschrieben - auch zur Einspeicherung des empfangenen Kennzeichen-Datenwortes verwendet. Wenn der Empfangstakt $T_E$ zwischen den Abfragezeitpunkten liegt, kann die Einspeicherung des abgefragten Datenwortes natürlich auch erst mit dem späten Einspeichertakt $ET_2$ erfolgen. Dann entspricht die Darstellung eines Einspeichertaktes ET in der Fig. 5 (g) einer Folge von 16 Einspeichertakten. Wird wie zu den Zeitpunkten $t_7$ und $t_{25}$ ein Kennzeichen-Datenwort zwischen den beiden Abfragetakten empfangen, so kann ein Kennzeichen-Datenwort durch ein neues den selben Fernsprechkanälen zugeordnetes überschrieben werden, bevor es ausgewertet wurde. Es wird hier nochmals daran erinnert, daß die Abfragetakte $T_A$ interne Signale des Mikroprozessors sind, mit denen die Speichereinrichtung abgefragt wird und auch die weitere logische Verarbeitung der Signale in den Mikroprozessoren an den Sendetakt gekoppelt ist. Die Umschaltung auf die verschiedenen Einspeichertakte ET - auch hier handelt es sich bei einer Version nach Fig. 2 ausschließlich um interne Signale des Mikroprozessors - geschieht aufgrund interner Auswertung der beschriebenen zeitlichen Zusammenhänge durch Aufruf unterschiedlicher Programmteile, die eine Übernahme in den ersten Mikroprozessor MP1 zu unterschiedlichen Zeiten bewirken.

Das Rücksetzen der Speichereinrichtung FL muß nicht unbedingt nach jeder Übernahme eines Kennzeichen-Datenwortes (KDW) erfolgen. Es genügt, wenn sie nach der letzten Einspeicherung vor dem ersten Abfrageimpuls $T_{A1}$ zurückgesetzt wird. Während der Übernahme mit Einspeichertakten ist ja ohnehin sichergestellt, daß kritische Zeitbereiche vermieden sind.

In Fig. 5 (f) ist ein entsprechender Vorgang bei einem gegenüber dem sendeseitigen Multiplexsignal und damit den Abfragetakten langsameren empfangenen Multiplexsignal und hierdurch mit entsprechend größerem Abstand der Empfangstakte $T_{EL}$ zueinander dargestellt. Zum Zeitpunkt $t_2$ liegt ein Kennzeichen-Datenwort vor, das zum Zeitpunkt $t_3$ abgefragt wird. Dies wiederholt sich zu den Zeitpunkten $t_5$ und $t_7$ bis zum Zeitpunkt $t_{11}$, wo zwischen den Abfragetakten ein Empfangstakt $T_{EL}$ auftritt und das zugehörige Signalisierungswort zum Zeitpunkt $t_{12}$ übernommen wird. Wie auch beim Fall des schnelleren Empfangstaktes $T_{ES}$ wird jetzt auf einen späten Einspeichertakt $ET_2$ umgeschaltet (h), der dafür sorgt, daß die Kennzeichen-Datenwörter störungsfrei eingespeichert werden. Der nächste Empfangstakt $T_{EL}$ tritt erst zum Zeitpunkt $t_{16}$ auf, so daß ein empfangenes Kennzeichen-Datenwort erst ca. eine Pulsrahmendauer später eingespeichert wird. Hierdurch verschiebt sich auch der mögliche Zugriffszeitpunkt des mit dem Sendetakt laufenden Mikroprozessors MP1 zum neu eingespeicherten Kennzeichen-Datenwort um nahezu eine Pulsrahmendauer; unter Umständen muß auf ein ca. vor einer Mehrfachrahmendauer eingespeichertes Kennzeichen-Datenwort zurückgegriffen werden. Wie bei zu schnellem Empfangstakt ergibt sich aber hierdurch lediglich eine zeitliche Verschiebung in der Auswertung der Kennzeichenwörter um eine Mehrfachrahmendauer. Der zum Zeitpunkt $t_{16}$ auftretende Empfangstakt $T_{EL}$ liegt nicht zwischen beiden Abtastimpulsen. Deshalb wird wieder auf einen frühen Einspeichertakt umgeschaltet. Als Kriterium, ob der frühe oder der späte Einspeichertakt verwendet wird, ist die Feststellung ausreichend, ob bei der zweiten Abfrage mit dem Abfragetakt $T_{A2}$ ein neues Kennzeichen-Datenwort vorliegt.

Wegen der großen Frequenzkonstanz zwischen den Sendetakt und empfangenen Multiplexsignal kann die Umschaltung zwischen den Einspeichertakten auch erst nach der nächsten Abfrage also dem nächsten ausgesendeten Mehrfachrahmen-Kennungswort, erfolgen.

Die Doppelabfrage wird nur jeweils während des Aussendes eines Mehrfachrahmen-Kennungswortes durchgeführt, weil hier keine kanalspezifischen vermittlungstechnischen Kriterien ausgewertet werden müssen und ausreichend Zeit im Programmablauf zur Verfügung steht. Bei ausreichender Frequenzgenauigkeit kann die Doppelanfrage seltener, z.B. bei jedem zehnten Mehrfachrahmen durchgeführt werden. Bei einer Ausführung nach Fig. 3 ist bei der Festlegung der Abfragetakte und Einspeichertakte zu berücksichtigen, daß der serielle Dateneingang des Schieberegisters ST bis zur Übernahme des eingespeicherten Kennzeichen-Datenwortes gesperrt ist.

## Patentansprüche

1. Verfahren zur Übernahme von Kennzeichen-Datenwörtern (KDW) eines empfangenen plesiochronen Multiplexsignals (MS), die in einem Signalisierungskanal (SK) eines Pulsrahmens (PR) übertragen werden, wobei mehrere Pulsrahmen jeweils einen Mehrfachrahmen (MPR) bilden, dessen Beginn durch ein Mehrfachrahmen-Kennungswort (KW) gekennzeichnet ist, in einen mit der Frequenz des auszusendenden Multiplexsignals synchronisierten Mikroprozessors (MP1) einer Kennzeichenumsetzer-Zentrale, dadurch gekennzeichnet,

daß einem Datenport (DP11) des Mikroprozessors (MP1) über einen Seriell/Parallel-Umsetzer (SPU), an dessen seriellem Dateneingang ($E_D$) das plesiochrone Multiplexsignal (MS) anliegt, empfangene Datenwörter parallel zugeführt werden,

daß in eine Speichereinrichtung (FL) der Empfang eines Kennzeichen-Datenwortes (KDW) mit einem Empfangstakt ($T_E$) eingespeichert wird, daß innerhalb eines Mehrfachrahmens (MPR) zwei Abfragen der Speichereinrichtung (FL) mit zwei in geringem zeitlichen Abstand ($T_P$) liegenden Abfragetakten ($T_{A1}$, $T_{A2}$) durchgeführt werden, wobei der minimale Abstand ($T_P$) durch den Frequenzunterschied zwischen dem ausgesendeten und dem empfangenen Multiplexsignal bestimmt wird,

daß bei einem Vorliegen eines Kennzeichen-Datenwortes (KDW) dieses eingespeichert wird, daß beim Auftreten des Empfangstaktes ($T_E$) vor dem ersten Abfragetakt ($T_{A1}$) ein zwischen den Abfragetakten ($T_{A1}$, $T_{A2}$) liegender früher Einspeichertakt ($ET_1$) mit einer der Pulsrahmendauer entsprechenden Periodendauer zum Einspeichern der weiteren Kennzeichen-Datenwörter (KDW) des Mehrfachrahmens (MPR) verwendet wird,

daß beim Auftreten des Empfangstaktes ($T_E$) zwischen den Abfragetakten ($T_{A1}$, $T_{A2}$) ein nach dem zweiten Abfragetakt ($T_{A2}$) liegender später Einspeichertakt ($ET_2$) zum Einspeichern der Kennzeichen-Datenwörter (KDW) verwendet wird und

daß die Speichereinrichtung (FL) nach dem Einspeichern eines Kennzeichen-Datenwortes (KDW) zurückgesetzt wird.

2. Verfahren nach Anspruch 1, dadurch gekennzeichnet,

daß das plesiochrone Multiplexsignal (MS) in ein Schieberegister (SR) seriell eingespeichert wird und daß im Abstand einer Pulsrahmendauer die im Signalisierungskanal (SK) übertragenen Kennzeichen-Datenwörter (KDW) aus dem Schieberegister (SR) in ein Register (RE) parallel übertragen werden.

3. Verfahren nach Anspruch 1, dadurch gekennzeichnet,

daß das plesiochrone Multiplexsignal (MS) in ein Schieberegister (SR) seriell eingespeichert wird,

daß dem Takteingang (E1) des Schieberegisters (SR) ein UND-Gatter (UN) vorgeschaltet ist, dessen zweiter Eingang mit dem Ausgang (Q) eine D-Kippstufe (FF) verbunden ist, der von jedem Empfangstakt ($T_E$) auf die logische Null zurückgestellt wird und nach dem Einlesen in den Mikroprozessor (MP1) wieder eingestellt wird.

4. Verfahren nach Anspruch 1, dadurch gekennzeichnet,
daß nur während des Aussendens des Mehrfachrahmen-Kennungswortes (KW) eine doppelte Abfrage der empfangenen Kennzeichen-Datenwörter (KDW) durchgeführt wird.

5. Verfahren nach Anspruch 1 oder Anspruch 4, dadurch gekennzeichnet,
daß eine doppelte Abfrage nur nach mehreren Mehrfachrahmen (MPR) durchgeführt wird.

6. Verfahren nach Anspruch 1, dadurch gekennzeichnet,
daß die Speichereinrichtung (FL) im Mikroprozessor (MP1) vorgesehen ist.

## Claims

1. Method for transferring signalling data words (KDW) of a received plesiochronous multiplexed signal (MS) which are transmitted in a signalling channel (SK) of a pulse frame (PR), a plurality of pulse frames forming in each case one multiframe (MPR), the beginning of which is marked by a multiframe alignment signal (KW), into a microprocessor (MP1) of a signalling converter exchange synchronized with the frequency of the multiplexed signal to be sent out, characterized in that received data words are fed in parallel to a data port (DP11) of the microprocessor (MP1) via a serial/parallel converter (SPU), at the serial data input ($E_D$) of which the plesiochronous multiplexed signal (MS) is present, in that the reception of a signalling data word (KDW) is stored in a memory element (FL) with a receive pulse ($T_E$), in that within a multiframe (MPR) two interrogations of the memory element (FL) are carried out with two interrogation pulses ($T_{A1}$, $T_{A2}$) having a small time interval ($T_p$), the minimum interval ($T_p$) being determined by the frequency difference between the multiplexed signal sent out and the one received, in that when a signalling data word (KDW) is present, it is stored, in that when the receive pulse ($T_E$) appears before the first interrogation pulse ($T_{A1}$), an early store pulse ($ET_1$) lying between the interrogation pulses ($T_{A1}$, $T_{A2}$) having a period duration corresponding to the pulse frame duration is used for storing the further signalling data words (KDW) of the multiframe (MPR), in that on the appearance of the receive pulse ($T_E$) between the interrogation pulses ($T_{A1}$, $T_{A2}$), a late store pulse ($ET_2$) lying after the second interrogation pulse ($T_{A2}$) is used for storing the signalling data words (KDW), and in that the memory element (FL) is reset after a signalling data word (KDW) has been stored.

2. Method according to Claim 1, characterized in that the plesiochronous multiplexed signal (MS) is serially stored in a shift register (SR), and in that the signalling data words (KDW) transmitted in the signalling channel (SK) are transmitted in parallel out of the shift register (SR) into a register (RE) at intervals of a pulse frame duration.

3. Method according to Claim 1, characterized in that the plesiochronous multiplexed signal (MS) is serially stored in a shift register (SR), in that an AND gate (UN) is connected prior to the pulse input (E1) of the shift register (SR), the second input of which AND gate is connected to the output (Q) of a D-type flip-flop (FF), which is reset to logical zero by each receive pulse ($T_E$) and is set again after the reading into the microprocessor (MP1).

4. Method according to Claim 1, characterized in that a double interrogation of the received signalling data words (KDW) is carried out only during the sending out of the multiframe signalling word (KW).

5. Method according to Claim 1 or Claim 4, characterized in that a double interrogation is carried out only after several multiframes (MPR).

6. Method according to Claim 1, characterized in that the memory element (FL) is provided in the microprocessor (MP1).

## Revendications

1. Procédé pour le transfert de mots de données d'identification (KDW) d'un signal multiplex plésiochrone reçu (MS), qui sont transmis dans un canal de signalisation (SK) d'une trame d'impulsions (PR), dans un microprocesseur (MP1), synchronisé par la fréquence du signal multiplex devant être émis, d'un central de conversion de signaux d'identification, plusieurs trames d'impulsions formant respectivement une trame multiple (MPR), dont le début est caractérisé par un mot (KW) d'identification de la trame multiple, caractérisé par le fait
que des mots de données reçus sont envoyés en parallèle à un accès de données (DP11) du microprocesseur (MP1) par l'intermédiaire d'un convertisseur série/parallèle (SPU), à l'entrée série de données ($E_D$) duquel est appliqué le signal multiplex plésiochrone (MS),
que la réception d'un mot de données d'identification (KDW) est mémorisée dans un dispositif de mémoire (FL) avec une cadence de réception ($T_E$),
qu'à l'intérieur d'une trame multiple (MPR), deux interrogations du dispositif de mémoire (FL) sont exécutées avec deux cadences d'interrogation ($T_{A1}$, $T_{A2}$), dont les impulsions sont séparées par un faible intervalle de temps ($T_p$), l'intervalle de temps ($T_p$) minimum étant déterminé par la différence entre les fréquences dudit signal multiplex émis et dudit signal multiplex reçu,
que, dans le cas de la présence d'un mot de données d'identification (KDW), ce mot est mémorisé,
que lors de l'apparition de la première impulsion de cadence de réception ($T_E$) avant la première impulsion de cadence d'interrogation ($T_{A1}$), une impulsion de cadence de mémorisation ($ET_1$), qui est située entre les impulsions des cadences d'interrogation ($T_{A1}$, $T_{A2}$) et possède une période dont la durée est égale à la durée de la trame d'impulsions, est utilisée pour la mémorisation des autres mots de données d'identification (KW) de la trame multiple (MPR),
que, lors de l'apparition de l'impulsion de cadence de réception ($T_E$) entre les impulsions des cadences d'interrogation ($T_{A1}$, $T_{A2}$), une impulsion ultérieure de cadence de mémorisation ($ET_2$), apparaissant

après l'impulsion de la seconde cadence d'interrogation (T$_{A2}$), est utilisée pour mémoriser les mots de données d'identification (KDW), et
que le dispositif de mémoire (FL) est ramené à l'état initial après la mémorisation d'un mot de données d'identification (KDW).

2. Procédé suivant la revendication 1, caractérisé par le fait
que le signal multiplex plésiochrone (MS) est mémorisé en série dans un registre à décalage (SR) et qu'à une distance correspondant à la durée d'une trame d'impulsions, les mots de données d'identification (KDW), qui sont transmis dans le canal de signalisation (SK), sont transmis en parallèle depuis le registre à décalage (SR) dans un registre (RE).

3. Procédé suivant la revendication 1, caractérisé par le fait
que le signal multiplex plésiochrone (MS) est mémorisé en série dans un registre à décalage (SR),
qu'en amont de l'entrée de cadence (E1) du registre à décalage (SR) est branchée une porte ET (UN), dont la seconde entrée est reliée à une sortie (Q) d'un étage à bascule bistable de type D (FF), qui est ramené à l'état logique zéro par chaque impulsion de cadence de réception (T$_E$) et est à nouveau positionné après la lecture dans le microprocesseur (MP1).

4. Procédé suivant la revendication 1, caractérisé par le fait
qu'une interrogation double des mots de données d'identification (KDW) reçus est exécutée uniquement pendant l'émission d'un mot (KW) d'identification de la trame multiple.

5. Procédé suivant la revendication 1 ou 4, caractérisé en ce
qu'une interrogation double est exécutée uniquement après plusieurs trames multiples (MPR).

6. Procédé suivant la revendication 1, caractérisé par le fait
que le dispositif de mémoire (FL) est prévu dans le microprocesseur (MP1).

# FIG 1

# FIG 2

# FIG 6

FIG 3

TE

ER

MP1

R

"1" D    Q

FF

TA/ET

READ

SR

DP11

E1

ED

UN

TS    MS

FIG 4

| ZSO | 1 | 2 | | 16 | 17 | 18 | | 31 |
|-----|-----|-----|-----|-----|-----|-----|-----|-----|
| RK | K1 | K2 | | SK | K16 | K17 | | K30 |

1 2 3 4 5 6 7 8

KW1   KW16

KDW

FIG 5